(19) Europäisches Patentamt / European Patent Office / Office européen des brevets

(11) **EP 4 398 627 A1**

(12) **DEMANDE DE BREVET EUROPEEN**

(43) Date de publication:
**10.07.2024 Bulletin 2024/28**

(21) Numéro de dépôt: **23219988.5**

(22) Date de dépôt: **22.12.2023**

(51) Classification Internationale des Brevets (IPC):
**H04W 24/08** (2009.01) **H04W 4/38** (2018.01)
**H04W 36/32** (2009.01) **H04W 84/18** (2009.01)

(52) Classification Coopérative des Brevets (CPC):
**H04W 24/08; H04W 4/38; H04W 36/32; H04W 84/18**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **27.12.2022 FR 2214562**

(71) Demandeur: **Commissariat à l'énergie atomique et aux énergies alternatives**
**75015 Paris (FR)**

(72) Inventeur: **SANA, Mohamed**
**38054 GRENOBLE CEDEX 09 (FR)**

(74) Mandataire: **Brevalex**
**Tour Trinity**
**1 B Place de la Défense**
**92400 Courbevoie (FR)**

(54) **MÉTHODE DE COMMUNICATION ET DE DÉTECTION CONJOINTE DE L ENVIRONNEMENT D'UN NOEUD DE RÉSEAU**

(57) La présente invention concerne une méthode de communication et de détection conjointe permettant de détecter le mouvement d'un obstacle dans l'environnement du noeud d'un réseau de télécommunication sans fil et, le cas échéant, de localiser cet obstacle. Le noeud découpe son environnement en secteurs angulaires et mesure en une pluralité d'instants d'observation une grandeur caractéristique du rapport signal sur bruit plus interférence sectorielle dans chacun de ces secteurs (410-420) pour former une matrice de mesure ($\Gamma_{\tau,n}(t)$). Une séparation de sources à l'aveugle est effectuée pour extraire de cette matrice une matrice des contributions sectorielles ($\Gamma_{\tau,n}^{(\bullet)}(t)$) des signaux interférents (430). Le mouvement d'un obstacle éventuel est détecté à partir de l'historique des contributions sectorielles (440), ce qui permet, le cas échéant, de prédire une situation de blocage (450) et de modifier l'allocation des ressources radio en conséquence (460).

**FIG. 4**

**Description**

**DOMAINE TECHNIQUE**

La présente invention concerne le domaine de la détection de l'environnement (*environment sensing*) dans un réseau de télécommunication, notamment pour la gestion de ressources radio ou RRM (*Radio Resource Management*). Un mode de réalisation particulier concerne également le domaine de l'apprentissage distribué (*Distributed Learning*).

**ÉTAT DE LA TECHNIQUE ANTÉRIEURE**

Avec le déploiement de réseaux cellulaires de 5ème génération (5G), les techniques de gestion de ressources radio ont dû évoluer pour prendre en compte de nouveaux cas d'usage faisant appel à des services fortement hétérogènes en termes de qualité de service (QoS). Aussi les techniques RRM font elles désormais appel à des stratégies de plus en plus complexes combinant allocation de puissance, formation de faisceaux, attribution de ressources de transmission (intervalles de temps, fréquences, codes), etc. pour pouvoir satisfaire à une telle hétérogénéité. Dans un tel contexte, il est important de pouvoir détecter l'environnement des différents noeuds du réseau (UEs et stations base) et de prédire son évolution, la connaissance de cet environnement permettant de gérer finement dans le temps et dans l'espace les ressources radio du réseau. Ainsi, par exemple, au sein d'un réseau cellulaire 5G où les communications dans la bande millimétrique peuvent faire l'objet d'une forte atténuation en cas d'obstruction (*blockage*), la prédiction de l'évolution de l'environnement permet d'anticiper la perte de QoS due à l'affaiblissement d'une liaison radio dans cette bande et de prendre des mesures pour y remédier, notamment en initiant à temps une procédure de handover. Plus globalement, elle pourra également permettre d'optimiser, selon le cas, la qualité de service de certaines communications, de réduire la fréquence des opérations de handover, de minimiser la consommation énergétique de certains noeuds ou de certains types de noeuds.

La détection de l'environnement des noeuds d'un réseau peut être réalisée en équipant ces noeuds d'un dispositif radar, de manière à ce qu'ils disposent d'une fonctionnalité duale de communication et de détection radar. Dans ce cas, un noeud peut être équipé de dispositifs de communication et radar distincts voire d'un système intégré de communication et de détection radar ou C&S (*Communication and radar Sensing*), utilisant une même ressource radio ou des ressources radio distinctes pour la fonction radar et celle de communication radio. On pourra trouver une description des différentes variantes de réalisation possibles de noeuds à fonctionnalité duale dans l'article de J.A. Zhang et al. intitulé « Perceptive mobile network : a cellular network with radio vision via joint communication and radio sensing », publié dans IEEE Vehicular Technology Magazine, vol. 16, N° 2, pp. 20-30, Juin 2021.

De manière générale, la détection radar de l'environnement par un noeud à fonctionnalité duale est basée sur des techniques classiques de mesure d'angle d'arrivée ou AoA (*Angle Of Arrival*), de temps de vol ou ToF (*Time of Flight*), de puissance de signal reçu ou RSS (*Receive Signal Strength*) pour localiser les obstacles de propagation radio. Elle n'exploite toutefois pas ou peu les mesures issues de la communication radio et suppose de modifier de manière significative l'architecture des noeuds, ce qui rend la rénovation (*retrofitting*) complexe et coûteuse.

L'objet de la présente invention est de proposer une méthode de communication et de détection conjointe de l'environnement d'un noeud de réseau ne s'appuyant que sur les mesures issues du système radio, sans ajout de dispositif radar et sans modification complexe de l'architecture du noeud.

**EXPOSÉ DE L'INVENTION**

La présente invention est définie par une méthode de communication et de détection conjointe pour détecter le mouvement d'un obstacle dans l'environnement d'un noeud, dit noeud de référence, d'un réseau de télécommunication sans fil, ledit noeud de référence ayant préalablement établi une liaison radio avec un noeud émetteur du réseau, ladite méthode étant originale en ce que le noeud de référence :

détermine une pluralité de secteurs angulaires non-chevauchants dans ledit environnement et dont le sommet est le noeud de référence, ainsi qu'une pluralité d'instants d'observation ;
effectue, en chacun des instants d'observation, une mesure d'une grandeur caractéristique d'un rapport signal sur bruit plus interférence sectorielle sur ladite liaison radio, pour chacun des secteurs angulaires, et construit une matrice de mesure ($\Gamma_{\tau,n}(t)$, $\Gamma_{\tau,n}^{j_0}(t)$) dont les éléments sont les mesures de ladite grandeur caractéristique ;
effectue une séparation de sources à l'aveugle à partir de ladite matrice de mesure et en extrait une matrice de contributions sectorielles ($\Gamma_{\tau,n}^{(\bullet)}(t), \Gamma_{\tau,n}^{j_0(\bullet)}(t)$) de signaux interférents dans les différents secteurs angulaires ;

détecte le mouvement d'un obstacle éventuel dans l'environnement du noeud de référence à partir d'au moins un historique desdites contributions sectorielles.

Avantageusement, une situation de blocage de ladite liaison est prédite à partir de caractéristiques du mouvement de l'obstacle dans l'environnement du noeud de référence.

Lorsqu'une telle situation de blocage de ladite liaison est prédite, il est effectué une modification des ressources radio dans le réseau.

Typiquement, la séparation de sources à l'aveugle est effectuée au moyen d'une décomposition en valeurs singulières de la matrice de mesure ou d'une analyse en composantes principales.

Selon un second mode de réalisation, le noeud de référence détermine les noeuds de son voisinage et effectue une cartographie et une localisation simultanées sur ledit environnement à partir de la matrice de contributions sectorielles qu'il a extraite ainsi que des matrices de contributions sectorielles qu'il a reçues, sous forme de messages, des noeuds de son voisinage.

Avantageusement, un dictionnaire cartographique est construit et mis à jour, chaque entrée du dictionnaire correspondant à l'intersection d'une pluralité de secteurs angulaires dont les sommets sont le noeud de référence ou des noeuds de son voisinage, chaque entrée contenant une signature constituée des contributions sectorielles des secteurs angulaires intervenant dans l'intersection associée à ladite entrée.

En cas de modification d'au moins une signature dans le dictionnaire cartographique entre deux instants d'observation, un changement est détecté et une réallocation de ressources radio du réseau est effectuée.

Alternativement, on calcule une divergence de Kullback-Leibler entre la distribution des signatures à un instant d'observation courant et celle à un instant d'observation précédent, sur l'ensemble du dictionnaire cartographique ou une partie de celui-ci, et que l'on effectue une réallocation de ressources radio du réseau lorsque la divergence de Kullback-Leibler excède un seuil prédéterminé.

Le voisinage du noeud de référence peut être obtenu en effectuant une présélection de noeuds du réseau au moyen d'un échantillonnage aléatoire ou d'une méthode des k plus proches voisins, puis un calcul, pour chaque noeud ainsi présélectionné, d'un score à partir de sa matrice de contributions sectorielles et celle du noeud de référence, le voisinage de ce noeud étant déterminé par les noeuds présélectionnés dont le score excède un seuil prédéterminé ou bien par les M noeuds ayant les scores les plus élevés où M est un entier non nul.

Le score d'un noeud présélectionné peut être calculé au moyen d'une métrique de similarité en cosinus, une divergence de Kullback-Leibler, un mécanisme d'attention ou par un réseau de neurones effectuant une opération de classification.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

[Fig. 1] illustre de manière schématique une situation d'interférence dans un réseau de télécommunication ;
[Fig. 2] représente un modèle illustrant le calcul d'un rapport signal sur bruit plus interférence sectorielle ;
[Fig. 3] représente un exemple de détection d'un obstacle dans l'environnement d'un noeud à partir d'une matrice représentative du rapport signal sur bruit plus interférence sectorielle au cours du temps ;
[Fig. 4] représente sous la forme d'ordinogramme le principe d'une méthode de communication et détection d'environnement conjointe, selon un premier mode de réalisation de l'invention ;
[Fig. 5] illustre un exemple de détection coopérative de la position d'un obstacle dans l'environnement d'un noeud de référence à partir des matrices de mesure obtenues par différents noeuds du voisinage de ce noeud de référence ;
[Fig. 6] représente sous la forme d'ordinogramme le principe d'une méthode de communication et détection d'environnement conjointe, selon un second mode de réalisation de l'invention ;
[Fig. 7] détaille l'étape de détermination du voisinage d'un noeud dans l'ordinogramme de la Fig. 6.

## EXPOSÉ DÉTAILLÉ DE MODES DE RÉALISATION PARTICULIERS

On considérera dans la suite un réseau de noeuds de télécommunication sans fil, non nécessairement cellulaire, dans lequel un premier noeud a établi une communication avec un second noeud au moyen d'une liaison, ladite liaison étant interférée par des signaux émis par des noeuds tiers, le cas échéant réfléchis par l'environnement voire par des surfaces réfléchissantes (*Reflective Intelligent Surfaces*).

Sans perte de généralité, et dans un souci de simplification de la présentation de l'invention, nous supposerons que ce réseau de télécommunication est cellulaire, que le premier noeud est un équipement d'utilisateur, UE, typiquement un terminal mobile et que le second noeud est une station de base, BS, servant ce noeud. La présente invention peut notamment s'appliquer au réseau cellulaire 5G, en particulier pour les communications dans le domaine millimétrique ou dans le domaine THz.

Nous considérerons un noeud quelconque du réseau, par exemple un équipement d'utilisateur UE, et le prendrons comme noeud de référence. Il est clair cependant que ce noeud pourra être alternativement une station de base, BS, du réseau.

L'idée à la base de la présente invention est de tirer parti de l'interférence spatiale affectant le noeud de référence et de la variation de cette interférence au cours du temps pour en déduire une information quant à la présence d'obstacles en mouvement éventuellement présents dans le voisinage de ce noeud. Plus précisément, la réception d'une communication par le noeud de référence (via une liaison descendante dans le cas d'un UE et d'une liaison montante dans le cas d'une BS) peut être affectée, par des interférences dues à la réception de signaux émis par les noeuds situés dans le voisinage de ce noeud.

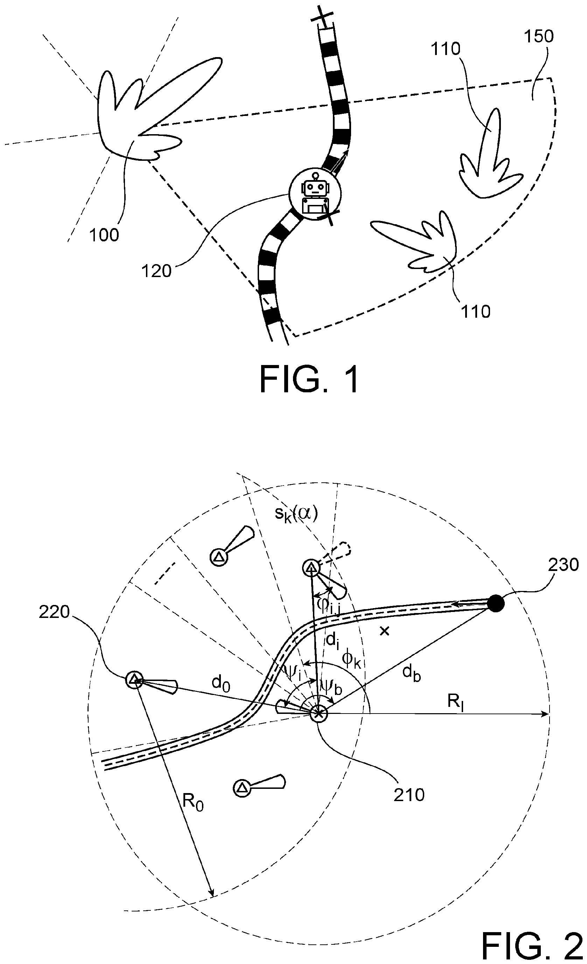

Cette situation est illustrée dans l'exemple représenté en Fig. 1. Le diagramme de réception de l'antenne du noeud de référence, 100, présente outre un lobe principal pointé vers la station de base, des lobes secondaires susceptibles de recevoir les signaux émis par des noeuds voisins tels que 110. Si un obstacle, 120, se déplace au sein du voisinage du noeud de référence, la situation d'interférence évolue au cours du temps. De manière générale, les interférences spatiales dues aux communications des noeuds avoisinants et les fluctuations de ces interférences au cours du temps peuvent fournir une information sur la présence et le déplacement d'obstacles au sein du voisinage du noeud de référence. Alors que le phénomène d'interférence spatiale dégrade la qualité des communications radio et est combattu pour cette raison, il est ici utilement exploité pour détecter une activité au sein de l'environnement du noeud de référence.

Le noeud de référence estime une grandeur caractéristique du rapport signal sur bruit plus interférence sectorielle, ce pour une pluralité de secteurs couvrant au moins une partie du voisinage du noeud de référence. L'interférence sectorielle est définie ici comme la somme des puissances des signaux interférents reçus dans un secteur angulaire donné, par exemple dans le secteur angulaire indiqué en 150.

On supposera pour illustrer l'invention que les noeuds sont distribués dans un plan selon un processus stochastique ponctuel de Poisson et que le canal entre deux noeuds suit un modèle de Friis, à savoir que la puissance $P^{Rx}$ du signal reçu par un noeud récepteur s'exprime à partir de la puissance émise $P^{Tx}$ un noeud émetteur au moyen de :
[Math.1]

$$P^{Rx} = h(t)\chi(t)P^{Tx}G^{Tx}G^{Rx}Cd^{-\eta} \qquad (1)$$

où $h(t)$ est un coefficient est le coefficient d'évanouissement (*fading coefficient*) du canal, $\chi(t)$ est un coefficient d'occultation, $G^{Tx}$, $G^{Rx}$ sont les gains d'antenne respectifs de l'émetteur et du récepteur dans la direction de propagation, $C$ est une constante d'atténuation, d est la distance entre les noeuds émetteur et récepteur et $\eta$ est un exposant d'affaiblissement sur le trajet de propagation.

Il est clair pour l'homme du métier que d'autres modèles de canal pourront être utilisés sans sortir du cadre de la présente invention.

La Fig. 2 représente un modèle illustrant le calcul d'un rapport signal sur bruit plus interférence sectorielle.

Dans ce modèle, les stations de base sont référencées par l'indice $i$ et les équipements d'utilisateurs par l'indice $j$.

Le noeud de référence, ici un équipement d'utilisateur, 210, portant l'indice $j_0$ reçoit un signal de communication d'un noeud émetteur, ici une station de base BS, 220, portant l'indice $i_0$. La communication est établie sur une liaison descendante entre la station de base $i_0$ et l'équipement d'utilisateur $j_0$.

On suppose que lobe principal d'émission de la station de base et que le lobe principal de réception de l'UE sont alignés, c'est-à-dire que la formation de faisceau est optimale. Dans cette configuration, les gains d'antenne en émission et en réception sont respectivement notés $G_m^{Tx}$ et $G_m^{Rx}$ et la puissance du signal de communication reçu par le noeud de référence n'est autre que :
[Math. 2]

$$P_{i_0,j_0}^{Rx} = P^{Tx}h_0(t)\chi_0(t)G_m^{Rx}G_m^{Tx}Cd_0^{-\eta} \qquad (2)$$

avec les mêmes notations que précédemment et où l'indice 0 indique que les grandeurs sont relatives aux noeuds $i_0$ et $j_0$. La distance $d_0$ est celle séparant les noeuds $i_0$ et $j_0$.

On considère maintenant les stations de base autres que celle servant le noeud de référence, c'est-à-dire telles

que $i \neq i_0$. Chacune de ces stations de base est susceptible d'engendrer une interférence spatiale sur la liaison entre les noeuds $i_0$ et $j_0$. La puissance du signal interférent généré par la liaison entre le noeud $i$ (station de base) et le noeud $j$ (UE) sur la liaison entre les noeuds $i_0$ et $j_0$ peut s'exprimer sous la forme suivante :
[Math. 3]

$$P_{i-j,i_0-j_0}^{Rx} = P_i^{Tx} h_i(t) \chi_i(t) G^{Rx}(\theta, \psi_i) G^{Tx}(\upsilon, \varphi_{i,j}) C d_i^{-\eta} \tag{3}$$

où $d_i$ est la distance entre les noeuds $i$ et $j_0$, $G^{Tx}(\upsilon, \varphi_{i,j})$ est le gain de l'antenne d'émission de la station de base $i$ dans la direction donnée par l'angle $\varphi_{i,j}$, où $v$ est la largeur angulaire du lobe principal du faisceau d'émission et $\varphi_{i,j}$ est l'angle de départ relatif (AoD) du signal interférent par rapport à la direction de ce lobe principal, $G^{Rx}(\theta, \psi_i)$ est le gain de l'antenne de réception de l'équipement d'utilisateur où $\theta$ est la largeur angulaire du lobe principal du faisceau de réception et $\psi_i$ est l'angle d'arrivée relatif (AoA) du signal interférent par rapport à la direction de ce lobe principal.

Le signal interférent total sur la liaison descendante entre les noeuds $i_0$ et $j_0$, provenant d'une direction $\psi$, à l'instant t, peut s'écrire alors :
[Math.4]

$$I(\psi, t) = C \sum_{(i,j) \neq (i_0, j_0)} P_i^{Tx} h_i(t) \chi_i(t) G^{Rx}(\theta, \psi_i) G^{Tx}(\upsilon, \varphi_{i,j_0}) d_i^{-\eta} \delta(\psi - \psi_i) \tag{4}$$

où $\delta(.)$ est le symbole de Dirac. Cette interférence spatiale peut être sommée sur chaque secteur. Autrement dit, l'interférence sectorielle $I_{s(\phi,\alpha)}(t)$, c'est-à-dire celle générée par les noeuds $i \in s(\phi, \alpha)$ où $s(\phi, \alpha)$ est le secteur de largeur angulaire $2\alpha$ et d'orientation angulaire absolue $\phi$, peut être obtenue par :
[Math.5]

$$I_{s(\phi,\alpha)}(t) = \int_{s(\phi,\alpha)} I(\psi, t) d\psi \tag{5}$$

Cette interférence sectorielle, c'est-à-dire crée par les noeuds du réseau appartenant à un secteur angulaire donné et ayant pour sommet le noeud de référence, permet de définir une grandeur caractéristique du rapport signal sur bruit plus interférence sectorielle :
[Math. 6]

$$\gamma_{s(\phi,\alpha)}(t) = \frac{P_{i_0,j_0}^{Rx}}{I_{s(\phi,\alpha)}(t) + N.B_0} \tag{6}$$

où $N$ est la densité spectrale de bruit et $B_0$ est la largeur de bande utilisée pour la communication (liaison descendante) entre les noeuds $i_0$ et $j_0$.

Il convient de noter que l'interférence sectorielle $I_{s(\phi,\alpha)}(t)$ dans un secteur donné dépend du temps. Si l'on suppose que les faisceaux d'émission des différentes stations de base sont statiques dans une plage temporelle donnée, la variation temporelle d'une interférence sectorielle provient d'une variation de configuration de l'environnement, par exemple le déplacement d'un obstacle au cours du temps, comme illustré en Fig. 2 (déplacement d'un robot, 230, à travers le secteur $s_0$).

Le voisinage du noeud de référence peut faire l'objet d'un découpage en secteurs angulaires contigus et non-chevauchants, n'ayant pas nécessairement des largeurs angulaires identiques. Par souci de simplification, nous supposerons cependant dans la suite que ce découpage est réalisé au moyen de $n + 1$ secteurs ayant tous la même largeur angulaire $2\alpha = \frac{2\pi}{n+1}$ où $n$ est un entier non nul. Le voisinage du noeud de référence est alors partitionné en secteurs $s_k$, $k = 0,..,n$, le secteur $s_0$ étant défini comme celui dont l'orientation, $\phi_0$, correspond à la liaison entre les noeuds $i_0$ et

$j_0$, les autres secteurs $s_k$ possédant des orientations respectives $\phi_k = \phi_0 - 2\alpha.\, k.$

Pour une fenêtre temporelle d'observation s'achevant au temps $t$ et de durée $\tau$, on collecte les valeurs prises par ladite grandeur caractéristique du rapport signal sur bruit plus interférence sectorielle aux instants $t - \tau + p\dfrac{\tau}{m}$

$,\,, p = 0,..,m$ où $\dfrac{\tau}{m}$ est une période de détection où $m$ est un entier non nul et ce, pour les différents secteurs couvrant le voisinage du noeud de référence, $s_k,\; k = 0,..,n.$

On obtient ainsi une matrice de mesure (*sensing matrix*) de l'environnement du noeud de référence :
[Math. 7]

$$\mathbf{\Gamma}_{\tau,n}(t) = \begin{pmatrix} \gamma_{s_0}(t-\tau) & \cdots & \gamma_{s_n}(t-\tau) \\ \vdots & \ddots & \vdots \\ \gamma_{s_0}(t) & \cdots & \gamma_{s_n}(t) \end{pmatrix} \qquad (7)$$

Lorsqu'un obstacle se trouve dans l'environnement du noeud de référence, cela se traduit par une modification du rapport sur bruit plus interférence sectorielle, cette modification dépendant du ou des lobe(s) secondaire(s) occultés et du coefficient d'occultation. La résolution avec laquelle cet obstacle peut être détecté dépend notamment de la largeur angulaire des secteurs ainsi que de la densité des noeuds interférents ($i \neq i_0$). On comprend en effet que plus la densité des noeuds interférentes est importante et plus faible est la largeur angulaire, meilleure sera la résolution spatiale.

En pratique, la réception des signaux interférents et l'intégration de l'interférence sectorielle dans les différents secteurs se fait de manière multiplexée dans le temps (TDD), en scannant à tour de rôle les différents secteurs angulaires. La fréquence de rafraîchissement peut être adaptative en fonction de l'activité dans les différents secteurs angulaires. Dans tous les cas, la fréquence de rafraîchissement dans les différents secteurs pourra être choisie de manière à ce que la matrice $\Gamma_{\tau,n}(t)$ représente fidèlement le rapport signal sur bruit plus interférence sectorielle des différents secteurs aux mêmes instants d'observation.

Selon un premier mode de réalisation la matrice de mesure peut permettre de détecter le mouvement d'un obstacle dans l'environnement du noeud de référence. A cette fin, les mesures de signal sur bruit plus interférence sectorielle au cours du temps, autrement dit les vecteurs lignes de la matrice de mesure, peuvent permettre une séparation de sources à l'aveugle (*blind source séparation*). En effet, matrice de mesure peut se décomposer en trois composantes distinctes :
[Math. 8]

$$\mathbf{\Gamma}_{\tau,n}(t) = \mathbf{\Gamma}_{\tau,n}^{(0)}(t) + \mathbf{\Gamma}_{\tau,n}^{(\bullet)}(t) + \mathbf{\Gamma}_{\tau,n}^{(noise)}(t) \qquad (8)$$

La première composante, $\Gamma_{\tau,n}^{(0)}(t)$, correspond à la contribution relative à l'occultation statique (*staticshadowing*), la

seconde composante, $\Gamma_{\tau,n}^{(\bullet)}(t)$, correspond à la contribution d'obstacles en mouvement dans l'environnement du noeud de référence et la troisième composante, $\Gamma_{\tau,n}^{(noise)}(t)$, correspond aux autres contributions de bruit telles que l'atténuation aléatoire (*random scattering*) et la diffusion (*scattering*).

La séparation de sources à l'aveugle permet d'isoler les différentes contributions à la matrice de mesure, notamment celle due aux obstacles en mouvement. Différentes méthodes de séparation de sources peuvent être appliquées, par exemple une décomposition en valeurs singulières ou SVD (*Singular Value Décomposition*) de la matrice de mesure ou bien une analyse en composantes principales ou PCA (*Principal Components Analysis*), de manière connue en soi. Par exemple, la matrice de mesure, de taille (m + 1) $\times$ ($n$ + 1) peut faire l'objet d'une décomposition SVD :
[Math. 9]

$$\Gamma_{\tau,n}(t) = \mathbf{U}\mathbf{\Sigma}\mathbf{V}^{T} \qquad (9)$$

où U est une matrice semi-unitaire de taille $(m + 1) \times r$, *V* est une matrice semi-unitaire de taille $(n + 1) \times r$, et $\Sigma$ est une matrice carrée diagonale de taille $r \times r$ avec $r = rang(\Gamma_{\tau,n}(t)) \leq min(m + 1, n + 1)$, les éléments diagonaux de $\Sigma$ étant les valeurs singulières $\sigma_1 \geq \sigma_2 \geq ... \geq \sigma_r$.

La relation (9) peut encore s'écrire :
[Math. 10]

$$\Gamma_{\tau,n}(t) = \sum_{\ell=1}^{r} \sigma_\ell \mathbf{u}_\ell \mathbf{v}_\ell^{T} = \sum_{\ell=1}^{\ell_0} \sigma_\ell \mathbf{u}_\ell \mathbf{v}_\ell^{T} + \sum_{\ell=\ell_0+1}^{\ell_1} \sigma_\ell \mathbf{u}_\ell \mathbf{v}_\ell^{T} + \sum_{\ell=\ell_1+1}^{r} \sigma_\ell \mathbf{u}_\ell \mathbf{v}_\ell^{T} \qquad (10)$$

dans laquelle les trois termes de sommation figurant à droite correspondent respectivement aux composantes $\Gamma_{\tau,n}^{(0)}(t)$, $\Gamma_{\tau,n}^{(\bullet)}(t)$, et $\Gamma_{\tau,n}^{(noise)}(t)$ de la matrice de mesure. En effet, la matrice $\Gamma_{\tau,n}^{(0)}(t)$ correspond essentiellement à un affaiblissement sur le trajet de propagation directe ou les multi-trajets, la seconde aux signaux des interféreurs du voisinage et la troisième à un bruit aléatoire (diffusion aléatoire, bruit thermique).

La liste ordonnée des valeurs singulières fait apparaître trois différents régimes de décroissance avec des changements de pente entre régimes successifs, ce qui permet de déterminer les indices $\ell_0$ et $\ell_1$, et permet donc d'isoler la matrice $\Gamma_{\tau,n}^{(\bullet)}(t) = \sum_{\ell=\ell_0+1}^{\ell_1} \sigma_\ell \mathbf{u}_\ell \mathbf{v}_\ell^{T}$.

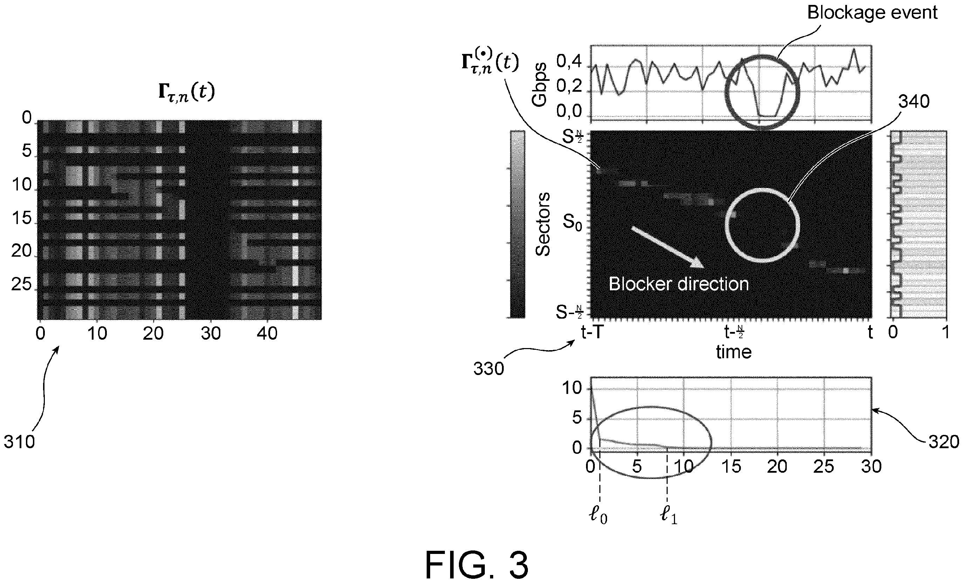

La détermination des indices $\ell_0$ et $\ell_1$ à partir de la matrice de mesure a été illustrée en Fig. 3. La partie gauche de la figure, 310, représente (l'amplitude) des éléments de la matrice $\Gamma_{\tau,n}(t)$, l'indice de secteur figurant en ordonnées et l'indice de l'instant de détection dans la fenêtre temporelle figurant en abscisses. La partie droite de la figure représente le résultat de la décomposition en valeurs singulières. Plus précisément, le diagramme 320 donne les valeurs singulières de la matrice, ordonnées par valeurs décroissantes, dans lequel on distingue les trois régimes de décroissance précités.

Les éléments de la matrice $\Gamma_{\tau,n}^{(\bullet)}(t)$ correspondant aux valeurs propres $\sigma_{\ell_0+1}$ à $\sigma_{\ell_1}$ sont représentés en 330. Les indices des secteurs ont été réarrangés en ordonnées pour centrer le diagramme sur le secteur $s_0$. On remarque en 340 un blocage de la liaison correspondant à l'apparition d'un obstacle entre les noeuds $i_0$ et $j_0$. Ce blocage peut être anticipé dans la mesure où l'obstacle vient d'abord masquer certaines sources d'interférence et donc augmenter le rapport signal sur bruit plus interférence sectorielle dans certains secteurs avant le blocage en question. La séquence chronologique des secteurs dans lesquels ce rapport augmente, et plus généralement l'historique du rapport signal sur bruit plus interférence sectorielle dans les différents secteurs angulaires, permet d'estimer la trajectoire (direction, vitesse angulaire du déplacement le long de la trajectoire) et, le cas échéant, la taille apparente de l'obstacle en question.

L'estimation de la trajectoire et, le cas échéant, de la taille apparente de l'objet permet d'anticiper la situation de blocage de la liaison et de gérer les ressources RRM en conséquence, par exemple de préparer un handover pour le noeud de référence ou de modifier une allocation de ressources.

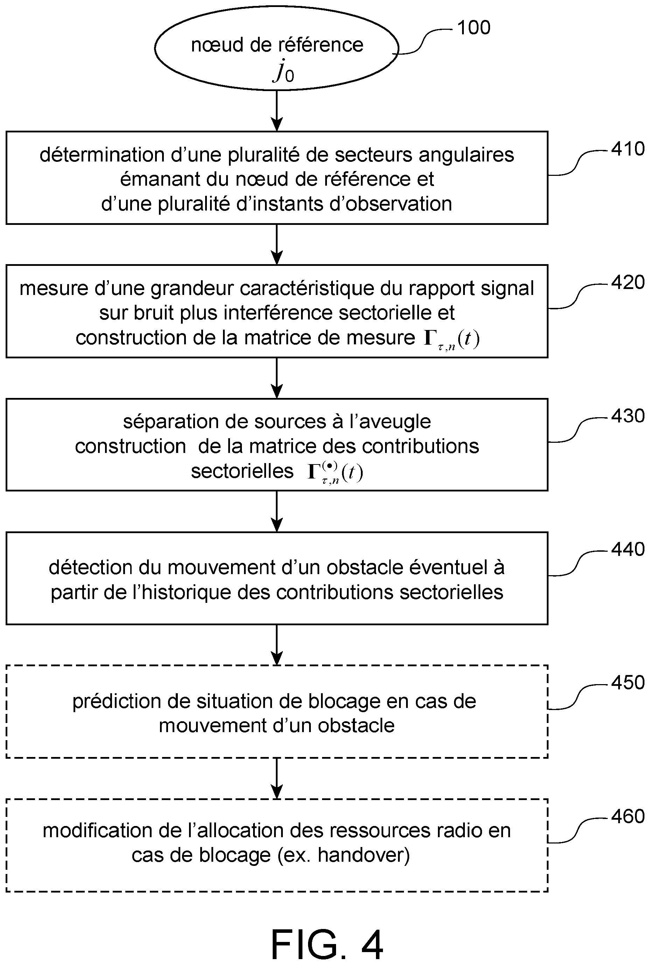

La Fig. 4 représente le principe d'une méthode de communication et de détection d'environnement conjointe, selon un premier mode de réalisation de l'invention.

Dans ce mode de réalisation, un noeud de référence d'un réseau de télécommunication sans fil effectue les mesures d'une grandeur caractéristique du rapport du bruit sur interférence sectorielle dans une pluralité de secteurs angulaires non-chevauchants recouvrant le voisinage de ce noeud et détecte le mouvement d'un obstacle éventuel dans ce voisinage. Optionnellement, cette détection permet au réseau de gérer ses ressources radio, par exemple en préparant un handover ou en modifiant une allocation de ressources.

A l'étape 410, le noeud de référence, $j_0$, ayant préalablement établi une communication avec un noeud émetteur, $i_0$, définit une pluralité de secteurs angulaires non-chevauchants dont il est l'origine, et une pluralité d'instants d'observation, par exemple en déterminant une largeur angulaire de secteur, $\alpha$, ou un nombre donné de secteurs, $n + 1$, ainsi qu'un nombre $m + 1$ d'instants d'observation dans une fenêtre temporelle de durée, $\tau$.

A l'étape 420, le noeud de référence effectue, à chaque instant d'observation et pour chaque secteur angulaire, une mesure d'une grandeur caractéristique du rapport signal sur bruit plus interférence sectorielle. Il construit à partir de ces mesures une matrice $\Gamma_{\tau,n}(t)$ de taille $(n + 1) \times (m + 1)$ .

A l'étape 430, le noeud de référence effectue une séparation de sources à l'aveugle à partir des mesures effectuées. Cette séparation peut être réalisée au moyen d'une analyse en composantes principales ou bien grâce à une décomposition en valeurs singulières de la matrice de mesure.

A l'étape 430, le noeud de référence détermine, parmi les sources identifiées à l'étape précédente, celles qui correspondent à des interférences dues à des signaux émis par des noeuds appartenant au voisinage du noeud de référence. Par exemple, lorsque la séparation de sources est réalisée au moyen d'une décomposition SVD, cette détermination peut être réalisée en identifiant des ruptures de pente dans la série des valeurs singulières en fonction de l'instant d'observation. On en déduit la matrice $\Gamma_{\tau,n}^{(\bullet)}(t)$ correspondant à la contribution des interférences générées par les noeuds du voisinage, à la matrice à $\Gamma_{\tau,n}(t)$. Plus précisément, la matrice $\Gamma_{\tau,n}^{(\bullet)}(t)$ fournit, à chaque instant d'observation, les contributions sectorielles des noeuds du voisinage à la matrice de mesure.

A l'étape 440, le noeud de référence détecte, à partir de l'historique des contributions sectorielles, le mouvement d'un obstacle éventuel dans le voisinage du noeud de référence.

A l'étape 450, si un mouvement est détecté à l'étape précédente, le noeud de référence effectue une prédiction de survenance d'une situation de blocage à partir des caractéristiques de ce mouvement.

A l'étape 460, si une situation de blocage est prédite par le noeud de référence, le réseau effectue une modification de l'allocation des ressources radio, par exemple effectue un handover une commutation de faisceau d'émission.

Les étapes 450 et 460 sont optionnelles dans la mesure où le noeud de référence peut, dans certaines applications, se limiter à la détection du mouvement d'un obstacle dans son environnement.

Dans un second mode de réalisation de l'invention, le noeud de référence effectue, grâce à la coopération de ses points voisins, une détection de la position d'un obstacle dans son environnement.

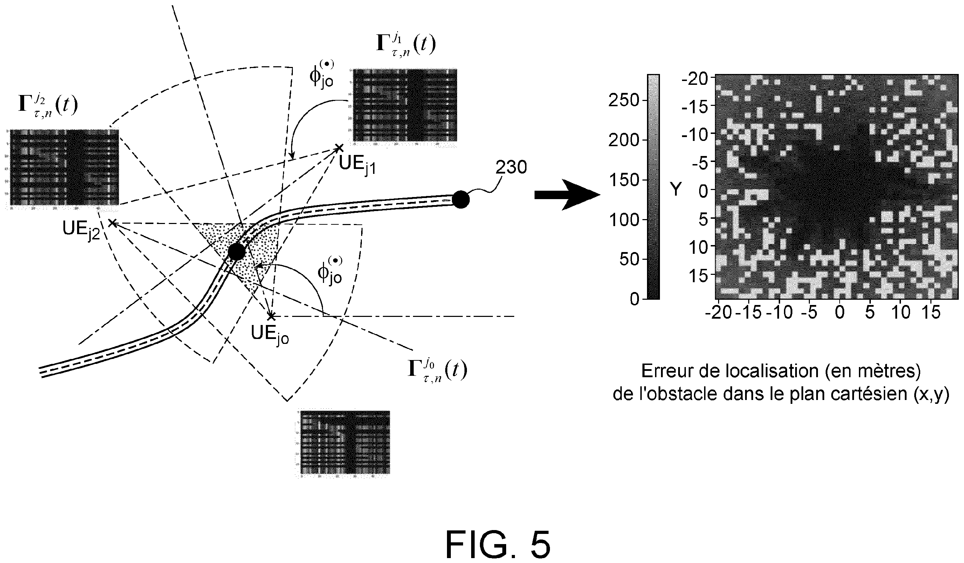

La Fig. 5 illustre un exemple de détection coopérative de la position d'un obstacle dans l'environnement d'un noeud de référence à partir des matrices de mesure obtenues par différents noeuds du voisinage de ce noeud de référence.

Dans ce mode de réalisation, le noeud de référence, $j_0$, effectue des mesures d'une grandeur caractéristique du rapport signal sur bruit plus interférence sectorielle dans une pluralité de secteurs angulaires et une pluralité d'instants d'observation d'une fenêtre temporelle. Elle en déduit une matrice de mesure, notée $\Gamma_{\tau,n}^{j_0}(t)$ , comme dans le premier mode de réalisation. A la différence, du premier mode de réalisation toutefois, les noeuds d'un voisinage de $j_0$, au sens défini plus loin, effectuent également chacun des mesures de ladite grandeur caractéristique du rapport signal sur bruit plus interférence sectorielle dans une pluralité de secteurs angulaires et en déduisent leurs propres matrices de mesure. Dans le cas, illustré, les noeuds $j_1$ et $j_2$ appartiennent au voisinage du noeud de référence et construisent leurs matrices de mesure respectives $\Gamma_{\tau,n}^{j_1}(t)$ et $\Gamma_{\tau,n}^{j_2}(t)$ .

Le noeud de référence ainsi que les noeuds appartenant au voisinage de ce noeud effectuent une séparation de sources à l'aveugle comme décrit précédemment, pour obtenir des matrices de contributions sectorielles notées $\Gamma_{\tau,n}^{j_0(\bullet)}(t), \Gamma_{\tau,n}^{j_1(\bullet)}(t), \Gamma_{\tau,n}^{j_2(\bullet)}(t)$ . Les noeuds $j_1$ et $j_2$ transmettent respectivement sous forme de message les matrices $\Gamma_{\tau,n}^{j_1(\bullet)}(t)$ et $\Gamma_{\tau,n}^{j_2(\bullet)}(t)$ au noeud de référence. Alternativement, le noeud de référence $j_0$ ainsi que les noeuds appartenant à son voisinage transmettent chacun sa matrice de contributions sectorielles à un noeud administrateur. A partir des séquences chronologiques des contributions sectorielles issues des matrices $\Gamma_{\tau,n}^{j_0(\bullet)}(t), \Gamma_{\tau,n}^{j_1(\bullet)}(t), \Gamma_{\tau,n}^{j_2(\bullet)}(t)$ , le noeud de référence ou, le cas échéant, le noeud administrateur, effectue une cartographie et localisation simultanées ou SLAM (*Simultaneous Localisation And Mapping*). On pourra trouver une description d'une méthode de cartographie et localisation simultanées dans l'article de H. Durrant-Whyte et al. intitulé « Simultaneous Localization and Mapping : part I » publié dans IEEE Robotics & Automation Magazine, vol. 13, N° 2 , pp. 99-110. Le fait de pouvoir disposer de mesures provenant de différents « angles de vue », plus précisément de différents secteurs angulaires distincts, dont les sommets sont situés en des points distincts, permet au noeud en charge du calcul de déterminer de localiser un obstacle éventuel en mouvement. La taille des intersections des différents secteurs angulaires donne une estimation des erreurs de localisation d'un obstacle dans l'environnement du noeud du référence (partie droite de la figure).

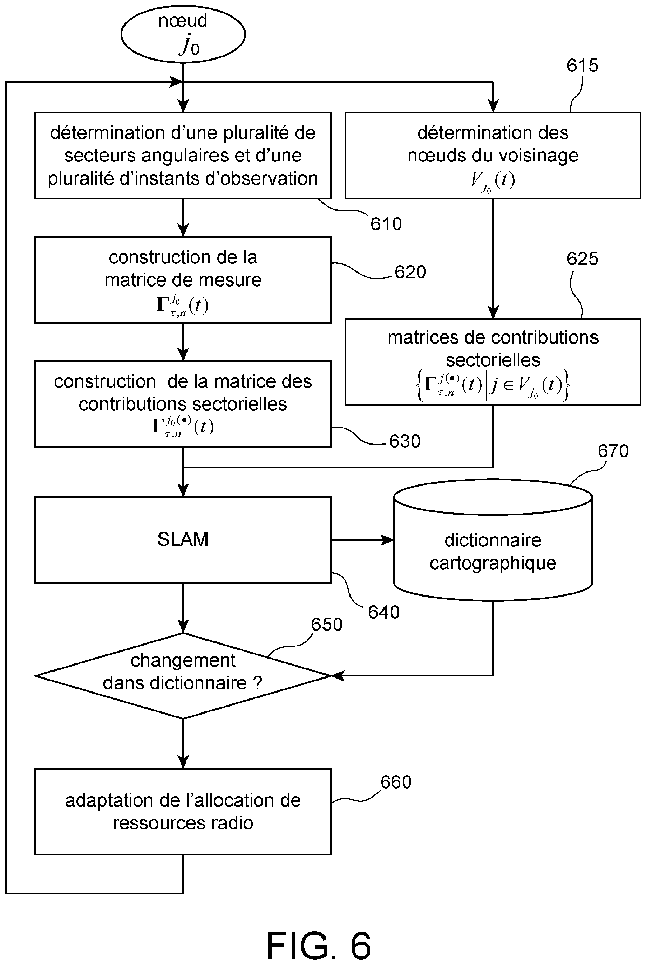

La Fig. 6 détaille sous la forme d'ordinogramme une méthode de communication et de détection de l'environnement d'un noeud de référence, selon un second mode de réalisation de l'invention.

La détection de l'environnement du noeud de référence vise ici à estimer de manière coopérative la position d'un obstacle en mouvement dans l'environnement du noeud en question.

Comme dans le premier mode de réalisation, le noeud de référence $j_0$ détermine en 610 une pluralité de secteurs angulaires dont il est le sommet ainsi qu'une pluralité d'instants d'observation, puis mesure, en 620, à chaque instant d'observation, une grandeur caractéristique du rapport signal sur bruit plus interférence sectorielle pour chacun desdits secteurs angulaires, de manière à construire la matrice de mesure, $\Gamma_{\tau,n}^{j_0}(t)$. En 630, il effectue une séparation de sources à l'aveugle, par exemple au moyen d'une décomposition en valeurs singulières, pour obtenir une matrice de contributions sectorielles $\Gamma_{\tau,n}^{j_0(\bullet)}(t)$.

En parallèle, le noeud de référence sélectionne en 615, parmi les noeuds du réseau, ceux qui appartiennent à son voisinage, $V_{j0}(t)$, selon un algorithme de sélection décrit plus loin, se basant sur les matrices de contributions sectorielles $\Gamma_{\tau,n}^{j(\bullet)}(t)$ reçues sous forme de messages de l'ensemble U des noeuds du réseau voire d'un sous-ensemble de ces noeuds.

A l'étape 625, il ne prend en compte que les matrices de contributions sectorielles respectivement obtenues des noeuds de son voisinage, autrement dit $\Gamma_{\tau,n}^{j(\bullet)}(t)$ avec $j \in V_{j0}(t)$.

En 640, le noeud de référence (ou le noeud administrateur), exécute un algorithme de cartographie et localisation simultanées, SLAM, à partir de l'ensemble des matrices de contribution sectorielles $\left\{\Gamma_{\tau,n}^{j_0(\bullet)}(t)\right\} \cup \left\{\Gamma_{\tau,n}^{j(\bullet)}(t) \mid j \in V_{j_0}(t)\right\}$, pour déterminer la présence d'un objet éventuel dans l'environnement du noeud de référence. La présence d'un objet est détectée par une signature constituée par les contributions sectorielles respectives de secteurs angulaires issus des noeuds $\{j_0\} \cup V_{j0}(t)$ tels que leur intersection soit non vide. Le noeud de référence (ou le noeud administrateur) élabore et met à jour, à chaque instant de détection, un dictionnaire cartographique, 670, dont les entrées correspondent à ces intersections, chaque entrée contenant une signature, une signature étant constituée par les contributions sectorielles des secteurs angulaires intervenant dans l'intersection associée à ladite entrée.

En 650, le noeud de référence (ou le noeud administrateur) détermine, pour chacune des entrées du dictionnaire en question, si un changement de signature est intervenu par rapport à l'instant de détection précédent. Alternativement, la détermination d'un changement pourra être effectuée sur l'ensemble du dictionnaire ou bien sur partie seulement, associée à une région de l'espace, à l'aide du calcul d'une divergence de Kullback-Leibler entre la distribution de signatures relatives à l'instant d'observation courant et la distribution de signatures relatives à l'instant de détection précédent.

Si un tel changement est détecté, le réseau adapte en 660 son allocation de ressources radio (RRM), par exemple effectue un handover ou une commutation d'un faisceau d'émission.

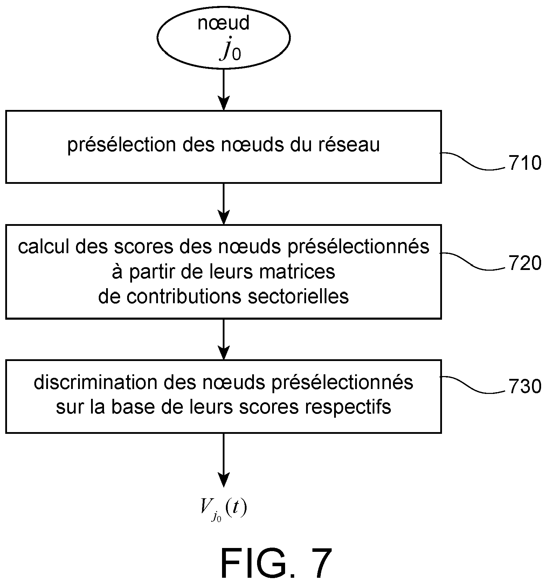

La Fig. 7 illustre de manière schématique la manière dont le noeud de référence détermine les noeuds qui appartiennent à son voisinage, $V_{j0}(t)$, ce pour chaque fenêtre temporelle d'observation.

Le voisinage du noeud $V_{j0}(t)$ peut être déterminé en sélectionnant (ou en souséchantillonnant) parmi l'ensemble $U$ des noeuds du réseau, voire d'un sous-ensemble $V$ de celui-ci obtenu préalablement dans une phase de découverte du réseau, ceux dont le score est supérieur à un certain seuil.

A l'étape 710, le noeud de référence $j_0$ effectue une pré-sélection des noeuds du réseau, par exemple au moyen d'un échantillonnage aléatoire. Cette présélection peut alternativement avoir été obtenue par une méthode de clustering dans l'ensemble $U$ ou $V$, par exemple une méthode des k plus proches voisins.

A l'étape 720, un score est calculé pour chacun de ces noeuds ainsi présélectionnés. Le score d'un noeud $j$ est basé sur son observation locale, $o_j$, cette observation locale étant comprise comme la matrice des contributions sectorielles $\Gamma_{\tau,n}^{j(\bullet)}(t)$ issue de sa matrice de mesure $\Gamma_{\tau,n}^{j}(t)$, ainsi que l'observation locale $o_{j0}$ du noeud de référence, c'est-à-dire la matrice des contributions sectorielles $\Gamma_{\tau,n}^{j_0(\bullet)}(t)$. Le score du noeud reflète l'importance de ce noeud dans la prédiction du mouvement d'un obstacle dans l'environnement du noeud de référence $j_0$.

Le score peut obtenu à partir d'une métrique de similarité en cosinus (*cosine similarity*), une divergence de Kullback-Leibler, un mécanisme d'attention, etc.

Alternativement, le score d'un noeud peut être donné par un processus de classification, implémenté par un réseau de neurones, fournissant pour chaque noeud la probabilité que l'observation $o_j$ se trouve dans la même classe que $o_{j_0}$ Ce processus de classification peut être entraîné en ligne de manière centralisée et supervisée.

Le noeud de référence effectue ensuite en 730 une discrimination des noeuds présélectionnés sur la base de leurs scores respectifs. Cette discrimination pourra être par exemple réalisée en ne retenant que les M noeuds (M étant un entier non nul) ayant obtenus les meilleurs scores ou bien ceux qui réalisent un score supérieur à un certain seuil.

Les noeuds ainsi retenus forment le voisinage $V_{j_0}(t)$ du noeud de référence.

Dans la description de l'invention, nous avons supposé que le réseau était déployé dans un espace 2D et que les secteurs angulaires étaient définis dans un plan. Il est cependant clair pour l'homme du métier que le réseau pourra être déployé dans un espace 3D (notamment lorsqu'il met en oeuvre des drones) et que les secteurs angulaires pourront être définis par leurs ampleurs angulaires en azimut et en élévation. En outre, la méthode de communication et de détection conjointe de la présente invention n'est pas limitée à la détection du mouvement d'un seul obstacle dans l'environnement d'un noeud de référence, et que le mouvement de plusieurs obstacles pourra être détecté dans le premier mode de réalisation, la localisation des obstacles étant de surcroît obtenue dans le second mode de réalisation. Enfin, nous avons supposé dans la description de l'invention que les signaux interférents étaient émis par des noeuds du réseau. Lorsque la densité spatiale des noeuds est insuffisante, on pourra à des surfaces de réflexion intelligentes (RIS) pour augmenter artificiellement la densité de ces noeuds en créant des noeuds apparents additionnels.

## Revendications

1. Méthode de communication et de détection conjointe pour détecter le mouvement d'un obstacle dans l'environnement d'un noeud, dit noeud de référence, d'un réseau de télécommunication sans fil, ledit noeud de référence ayant préalablement établi une liaison radio avec un noeud émetteur du réseau, ladite méthode étant **caractérisée en ce que** le noeud de référence :

   détermine une pluralité de secteurs angulaires non-chevauchants dans ledit environnement et dont le sommet est le noeud de référence, ainsi qu'une pluralité d'instants d'observation (410, 610) ;
   effectue, en chacun des instants d'observation, une mesure d'une grandeur caractéristique d'un rapport signal sur bruit plus interférence sectorielle sur ladite liaison radio, pour chacun des secteurs angulaires, et construit une matrice de mesure ($\Gamma_{\tau,n}(t)$, $\Gamma_{\tau,n}^{j_0}(t)$) dont les éléments sont les mesures de ladite grandeur caractéristique (420, 620) ;
   effectue une séparation de sources à l'aveugle à partir de ladite matrice de mesure et en extrait une matrice de contributions sectorielles ($\Gamma_{\tau,n}^{(\bullet)}(t), \Gamma_{\tau,n}^{j_0(\bullet)}(t)$) de signaux interférents dans les différents secteurs angulaires (430, 630);
   détecte le mouvement d'un obstacle éventuel dans l'environnement du noeud de référence à partir d'au moins un historique desdites contributions sectorielles (440, 640-650).

2. Méthode de communication et de détection conjointe selon la revendication 1, **caractérisée en ce qu'**une situation de blocage de ladite liaison est prédite à partir de caractéristiques du mouvement de l'obstacle dans l'environnement du noeud de référence.

3. Méthode de communication et de détection conjointe selon la revendication 1, **caractérisée en ce que** si une situation de blocage de ladite liaison est prédite, il est effectué une modification des ressources radio dans le réseau.

4. Méthode de communication et de détection conjointe selon la revendication 1, **caractérisée en ce que** la séparation de sources à l'aveugle est effectuée au moyen d'une décomposition en valeurs singulières de la matrice de mesure ou d'une analyse en composantes principales.

5. Méthode de communication et de détection conjointe selon la revendication 1, **caractérisée en ce que** le noeud de référence détermine les noeuds de son voisinage (615) et effectue une cartographie et une localisation simultanées sur ledit environnement (640) à partir de la matrice de contributions sectorielles qu'il a extraite ainsi que des matrices de contributions sectorielles qu'il a reçues, sous forme de messages, des noeuds de son voisinage.

**6.** Méthode de communication et de détection conjointe selon la revendication 5, **caractérisée en ce qu'**un dictionnaire cartographique (670) est construit et mis à jour, chaque entrée du dictionnaire correspondant à l'intersection d'une pluralité de secteurs angulaires dont les sommets sont le noeud de référence ou des noeuds de son voisinage, chaque entrée contenant une signature constituée des contributions sectorielles des secteurs angulaires intervenant dans l'intersection associée à ladite entrée.

**7.** Méthode de communication et de détection conjointe selon la revendication 6, **caractérisée en ce qu'**en cas de modification d'au moins une signature dans le dictionnaire cartographique entre deux instants d'observation, un changement est détecté (650) et une réallocation de ressources radio du réseau est effectuée.

**8.** Méthode de communication et de détection conjointe selon la revendication 6, **caractérisée en ce que** l'on calcule une divergence de Kullback-Leibler entre la distribution des signatures à un instant d'observation courant et celle à un instant d'observation précédent, sur l'ensemble du dictionnaire cartographique ou une partie de celui-ci, et que l'on effectue une réallocation de ressources radio du réseau lorsque la divergence de Kullback-Leibler excède un seuil prédéterminé.

**9.** Méthode de communication et de détection conjointe selon l'une des revendications 5 à 8, **caractérisée en ce que** le voisinage du noeud de référence est obtenu en effectuant une présélection (710) de noeuds du réseau au moyen d'un échantillonnage aléatoire ou d'une méthode des k plus proches voisins, puis calcule (720) pour chaque noeud ainsi présélectionné un score à partir de sa matrice de contributions sectorielles et celle du noeud de référence, le voisinage de ce noeud étant déterminé (730) par les noeuds présélectionnés dont le score excède un seuil prédéterminé ou bien par les M noeuds ayant les scores les plus élevés où M est un entier non nul.

**10.** Méthode de communication et de détection conjointe selon la revendication 9, **caractérisée en ce que** le score d'un noeud présélectionné est calculé au moyen d'une métrique de similarité en cosinus, une divergence de Kullback-Leibler, un mécanisme d'attention ou par un réseau de neurones effectuant une opération de classification.

FIG. 1

FIG. 2

$\Gamma_{\tau,n}(t)$

310

Blockage event

$\Gamma_{\tau,n}^{(\cdot)}(t)$

340

Sectors

Blocker direction

330

320

$\ell_0$    $\ell_1$

FIG. 3

nœud de référence
$j_0$ ⟋— 100

↓

détermination d'une pluralité de secteurs angulaires émanant du nœud de référence et d'une pluralité d'instants d'observation ⟋— 410

↓

mesure d'une grandeur caractéristique du rapport signal sur bruit plus interférence sectorielle et construction de la matrice de mesure $\Gamma_{\tau,n}(t)$ ⟋— 420

↓

séparation de sources à l'aveugle construction de la matrice des contributions sectorielles $\Gamma_{\tau,n}^{(\bullet)}(t)$ ⟋— 430

↓

détection du mouvement d'un obstacle éventuel à partir de l'historique des contributions sectorielles ⟋— 440

↓

prédiction de situation de blocage en cas de mouvement d'un obstacle ⟋— 450

↓

modification de l'allocation des ressources radio en cas de blocage (ex. handover) ⟋— 460

# FIG. 4

$\Gamma_{\tau,n}^{j_1}(t)$

$\Gamma_{\tau,n}^{j_2}(t)$

$\phi_{j_0}^{(\bullet)}$

UE$_{j_1}$

230

UE$_{j_2}$

$\phi_{j_0}^{(\bullet)}$

UE$_{j_0}$

$\Gamma_{\tau,n}^{j_0}(t)$

Erreur de localisation (en mètres)
de l'obstacle dans le plan cartésien (x,y)

# FIG. 5

EP 4 398 627 A1

nœud
$j_0$

détermination d'une pluralité de secteurs angulaires et d'une pluralité d'instants d'observation

détermination des nœuds du voisinage
$V_{j_0}(t)$

615

610

construction de la matrice de mesure
$\Gamma_{\tau,n}^{j_0}(t)$

620

matrices de contributions sectorielles
$\left\{ \Gamma_{\tau,n}^{j(\bullet)}(t) \middle| j \in V_{j_0}(t) \right\}$

625

construction de la matrice des contributions sectorielles
$\Gamma_{\tau,n}^{j_0(\bullet)}(t)$

630

670

SLAM

dictionnaire cartographique

640

changement dans dictionnaire ?

650

adaptation de l'allocation de ressources radio

660

FIG. 6

nœud
$j_0$

| présélection des nœuds du réseau | 710 |

| calcul des scores des nœuds présélectionnés à partir de leurs matrices de contributions sectorielles | 720 |

| discrimination des nœuds présélectionnés sur la base de leurs scores respectifs | 730 |

$V_{j_0}(t)$

# FIG. 7

Europäisches
Patentamt

European
Patent Office

Office européen
des brevets

**RAPPORT DE RECHERCHE EUROPEENNE**

Numéro de la demande

EP 23 21 9988

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2019/364492 A1 (AZIZI SHAHRNAZ [US] ET AL) 28 novembre 2019 (2019-11-28)<br>* alinéa [0998] *<br>* alinéa [1136] *<br>* alinéa [1137] *<br>* figure 91 * | 1-10 | INV.<br>H04W24/08<br>H04W4/38<br>H04W36/32<br>H04W84/18 |
| A | US 2012/092211 A1 (HAMPEL HERMANN [DE] ET AL) 19 avril 2012 (2012-04-19)<br>* abrégé * | 1-10 | |
| A | US 2018/069681 A1 (CHAKRABORTY KAUSHIK [US] ET AL) 8 mars 2018 (2018-03-08)<br>* alinéas [0076], [0077], [0086] - [0089] * | 1-10 | |
| A | WO 2014/204171 A1 (LG ELECTRONICS INC [KR]) 24 décembre 2014 (2014-12-24)<br>* alinéas [0073] - [0089] * | 1-10 | |
| A | TSANG Y M ET AL: "Detecting Human Blockage and Device Movement in mmWave Communication System",<br>GLOBAL TELECOMMUNICATIONS CONFERENCE (GLOBECOM 2011), 2011 IEEE, IEEE,<br>5 décembre 2011 (2011-12-05), pages 1-6,<br>XP032119638,<br>DOI: 10.1109/GLOCOM.2011.6134444<br>ISBN: 978-1-4244-9266-4<br>* le document en entier * | 1-10 | DOMAINES TECHNIQUES RECHERCHES (IPC)<br><br>H04W |

Le présent rapport a été établi pour toutes les revendications

| Lieu de la recherche | Date d'achèvement de la recherche | Examinateur |
|---|---|---|
| Munich | 23 mai 2024 | Tessier, Serge |

## ANNEXE AU RAPPORT DE RECHERCHE EUROPEENNE
## RELATIF A LA DEMANDE DE BREVET EUROPEEN NO.

EP 23 21 9988

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-05-2024

| Document brevet cité au rapport de recherche | Date de publication | Membre(s) de la famille de brevet(s) | Date de publication |
|---|---|---|---|
| US 2019364492 A1 | 28-11-2019 | CN 110301143 A | 01-10-2019 |
| | | CN 114679762 A | 28-06-2022 |
| | | CN 114900797 A | 12-08-2022 |
| | | CN 114900858 A | 12-08-2022 |
| | | CN 114938533 A | 23-08-2022 |
| | | CN 114979973 A | 30-08-2022 |
| | | CN 114980221 A | 30-08-2022 |
| | | CN 115103330 A | 23-09-2022 |
| | | DE 112017006689 T5 | 12-09-2019 |
| | | EP 3563595 A2 | 06-11-2019 |
| | | JP 7318044 B2 | 31-07-2023 |
| | | JP 2020507233 A | 05-03-2020 |
| | | JP 2022071204 A | 13-05-2022 |
| | | JP 2023106527 A | 01-08-2023 |
| | | KR 20190093204 A | 08-08-2019 |
| | | KR 20230009517 A | 17-01-2023 |
| | | US 2019364492 A1 | 28-11-2019 |
| | | US 2020205062 A1 | 25-06-2020 |
| | | US 2023138578 A1 | 04-05-2023 |
| | | US 2024073796 A1 | 29-02-2024 |
| | | WO 2018125686 A2 | 05-07-2018 |
| US 2012092211 A1 | 19-04-2012 | CN 102227647 A | 26-10-2011 |
| | | DE 102008059424 A1 | 10-06-2010 |
| | | EP 2353029 A1 | 10-08-2011 |
| | | US 2012092211 A1 | 19-04-2012 |
| | | WO 2010060651 A1 | 03-06-2010 |
| US 2018069681 A1 | 08-03-2018 | AU 2017321309 A1 | 07-02-2019 |
| | | AU 2017321310 A1 | 07-02-2019 |
| | | BR 112019003525 A2 | 21-05-2019 |
| | | BR 112019003548 A2 | 28-05-2019 |
| | | CA 3032366 A1 | 08-03-2018 |
| | | CA 3032372 A1 | 08-03-2018 |
| | | CN 109644400 A | 16-04-2019 |
| | | CN 109644472 A | 16-04-2019 |
| | | CN 109644473 A | 16-04-2019 |
| | | EP 3508006 A1 | 10-07-2019 |
| | | EP 3508017 A1 | 10-07-2019 |
| | | EP 3508018 A1 | 10-07-2019 |
| | | JP 6985374 B2 | 22-12-2021 |
| | | JP 2019530304 A | 17-10-2019 |
| | | SG 11201900378T A | 28-03-2019 |
| | | US 2018069639 A1 | 08-03-2018 |
| | | US 2018069681 A1 | 08-03-2018 |
| | | US 2018070363 A1 | 08-03-2018 |

Pour tout renseignement concernant cette annexe : voir Journal Officiel de l'Office européen des brevets, No.12/82

EPO FORM P0460

page 1 de 2

**ANNEXE AU RAPPORT DE RECHERCHE EUROPEENNE
RELATIF A LA DEMANDE DE BREVET EUROPEEN NO.**

EP 23 21 9988

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-05-2024

| Document brevet cité au rapport de recherche | Date de publication | Membre(s) de la famille de brevet(s) | | Date de publication |
|---|---|---|---|---|
| | | WO | 2018044804 A1 | 08-03-2018 |
| | | WO | 2018044805 A1 | 08-03-2018 |
| | | WO | 2018044810 A1 | 08-03-2018 |
| WO 2014204171 A1 | 24-12-2014 | CN | 105308889 A | 03-02-2016 |
| | | EP | 3011693 A1 | 27-04-2016 |
| | | JP | 6175187 B2 | 02-08-2017 |
| | | JP | 2016521085 A | 14-07-2016 |
| | | KR | 20160022303 A | 29-02-2016 |
| | | RU | 2015153553 A | 25-07-2017 |
| | | US | 2016119936 A1 | 28-04-2016 |
| | | US | 2018027572 A1 | 25-01-2018 |
| | | WO | 2014204171 A1 | 24-12-2014 |

EPO FORM P0460

Pour tout renseignement concernant cette annexe : voir Journal Officiel de l'Office européen des brevets, No.12/82

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.A. ZHANG et al.** Perceptive mobile network : a cellular network with radio vision via joint communication and radio sensing. *IEEE Vehicular Technology Magazine,* Juin 2021, vol. 16 (2), 20-30

- **H. DURRANT-WHYTE et al.** Simultaneous Localization and Mapping : part I. *IEEE Robotics & Automation Magazine,* vol. 13 (2), 99-110